# EUROPEAN PATENT SPECIFICATION

(11) **EP 2 694 359 B1**
(45) Date of publication and mention of the grant of the patent: **10.04.2019**
(21) Application number: 11720869.4
(22) Date of filing: 01.04.2011
(51) Int. Cl.: B60T 7/10, B60T 11/08, B60T 11/16, B60T 11/18

(54) **PUMP FOR VEHICLES CONTROLLED BY HANDLEBAR FOR BRAKE OR CLUTCH**
BREMS- ODER KUPPLUNGSBETÄTIGUNGSZYLINDER FÜR LENKERGEFÜHRTES FAHRZEUG
POMPE POUR FREIN OU EMBRAYAGE POUR VÉHICULE GUIDÉ PAR UN GUIDON

(43) Date of publication of application: 12.02.2014
(73) Proprietor: Freni Brembo S.p.A., 24035 Curno (Bergamo) (IT)
(72) Inventor: CARONIA, Marco, I-24016 San Pellegrino Terme Bergamo (IT); GHERARDI, Pierangelo, I-24019 Zogno Bergamo (IT)
(74) Representative: Crippa, Paolo Ernesto
(86) International application number: PCT/IB2011/051410
(87) International publication number: WO 2012/131441

(56) References cited:
- DE-T2- 60 024 598
- JP-U- H0 382 691
- US-A- 5 050 381

## Description

**.** The present invention relates to a pump for vehicles controlled by handlebar for brake or clutch.

**.** In particular, the present invention relates to a pump for vehicles controlled by handlebar of the radial type, that is, substantially arranged with the pump body substantially oriented radially relative to the handlebar.

**.** As known-, the pumps for vehicles controlled by handlebar are actuated by a hand lever. The pump actuation causes, for example, the braking action of the vehicle generating a pressure in a brake fluid that through a hydraulic circuit reaches calipers placed astride of a rotating disc integral with a wheel of the vehicle. The fluid pressure into the hydraulic circuit actuates pistons located into the pump, which exert a braking action on the disc.

**.** These pumps require a special adjustment that consists in precise dimensional ratios between the different parts thereof or in the introduction of special devices for adjusting the position of the different parts of the pump to allow changing the relative position of the parts, in particular of the hand lever, in order to change the ratio between the force exerted with the lever on the piston cylinder unit of the pump and the stroke of the same lever.

**.** A need is particularly felt for sizing the pumps, or the devices thereof, so as to allow an adequate modulation of the action exerted thanks to the hand lever on the pump, in order to adjust for example the braking action. The adjustment needs not always to take place for allowing a high force and a short stroke of the lever, but sometimes the vehicle usage conditions require an adjustment that allows having longer strokes of the lever and softer actions in order to adequately modulate the braking action of the vehicle to the different requirements of travel thereof.

**.** At the same time, a need is particularly felt for optimising the thrust that the hand lever exerts on the floating part of the pump unit, in particular in order to prevent actions that, if not properly oriented, disperse the driver's energy, not turning it into thrust actions along the stroke of the pump unit floating element.

**.** The users require all of the above to be obtained by pumps with particularly limited overall dimensions.

**.** With reference to these requirements and problems, solutions have long been proposed. US5050381 A describes a state of the art master cylinder with variable leverage, where cylinder and lever shafts are on the same side of longitudinal axis of the handlebar.

**.** For example, US 2006/0185465 describes a radial motor pump having the pump body integral to the vehicle handlebar. A lever is constrained in an oscillating manner to this pump body whereon a force amplification device integral with the pump body also acts.

**.** The lever acts on the floating part of the cylinder piston unit by a cam.

**.** While this known solution is satisfactory from many points of view, it is particularly difficult in its adjustment due to the sudden action exerted by the force amplification device that operates when the dead centre thereof is exceeded.

**.** EP 0405945 describes an axial motor pump having a pump body integral to the handlebar and parallel thereto, an actuation lever being connected thereto by a lever position adjustment device.

**.** While this solution is satisfactory from many points of view, it is not suitable for exerting actions on the cylinder piston unit that are in axis with the cylinder and at the same time it is particularly complicated in the adjustment of the effects exerted by the lever.

**.** Similar solutions are also known from JP 8258777**.**

**.** WO2007/128058 describes a motor pump with the pump body integral to the handlebar and an actuation lever constrained to an articulated quadrilateral.

**.** This solution allows considerable adjustment degrees of the lever effects on the cylinder piston unit, but it implies a considerable construction complication, since in any case it does not ensure a lever thrust in axis with the cylinder.

**.** US 6454075 describes a pump for automotive use having the pump body oscillating relative to the support and an actuation lever hinged integral to the pump body.

**.** This embodiment is particularly complex in its construction and with difficult adjustment and moreover, it does not ensure a lever thrust on the piston in axis with the cylinder.

**.** DE 3841719 describes a support structure that carries a hinged pump arranged coaxial to a spring. Such support structure also carries a hinged pump actuation lever opposite the articulation thereof.

**.** While this solution is satisfactory from many points of view, it is particularly cumbersome and not suitable for the introduction of devices for adjusting the lever effects.

**.** US 2002/070605 describes a support structure for the pump connected thereto by a hinge through a considerably cumbersome architecture that in any case does not allow a lever thrust in axis with the pump cylinder.

**.** Therefore, the object of the present invention is that of devising a pump for vehicles controlled by handlebar exhibiting such structural and functional features as to meet the aforesaid requirements and, at the same time, obviate the drawbacks mentioned with reference to the prior art.

**.** Such problem is solved by a pump according to claim 1 and by a vehicle according to claim 10.

**.** According to a general embodiment, a pump of a vehicle controlled by handlebar, for example but not necessarily for actuating a braking system or a clutch system, comprises a support, or pump fork, having a connecting portion to said handlebar. Said connecting portion defines an axis of connecting handlebar portion.

**.** Advantageously, said fork comprises a pump hinge portion or pump hinge and also a fork hinge portion or fork hinge.

**.** Said pump further comprises a pump body comprising a cylinder wherein a piston is seated, also called float, suitable for pressurising a fluid present in said cylinder and suitable for being put in fluid communication with a system, for example but not necessarily, a brake or clutch system.

**.** Advantageously, said pump unit is connected in an oscillating manner to said pump fork.

**.** Said pump further comprises a lever that may be actuated by a hand or a lever connected by a push rod to said float so as to exert a pressure thereon for pressurising said brake fluid present in the cylinder.

**.** Advantageously, said lever is connected in an oscillating manner to said fork hinge.

**.** According to a preferred embodiment, said pump hinge is arranged on one side of said axis of connecting handlebar portion and said fork hinge is arranged on one side of said axis of connecting handlebar portion opposite relative to said pump hinge.

**.** In other words, said pump hinge and said fork hinge are arranged opposite relative to said axis.

**.** Thanks to this pump, according to an embodiment, the centre distance of the pump fork or support varies by modifying the fork hinge position relative to the push rod and modifying the lever and the push rod oscillation accordingly.

**.** In this way it is possible to modify the ratio between the stroke and the force exerted on the lever.

**.** Thanks to the variability of the centre distance between the fork hinge and the push rod, during the braking action it is possible to ensure a longer initial stroke that allows recovering all the clearances present in the braking system and in the device, and have it followed by a shorter stroke that ensures an application of a greater force and a greater immediacy of the braking action, in particular in the case of sports usage. According to an embodiment, thanks to the oscillation of the pump unit and of the lever it is possible to have a centre distance between the fork hinge and the push rod that is variable during the actuation, wherein at first the centre distance is greater than what it is at the end of the lever action stroke. Nevertheless, thanks to the proposed pump, according to an embodiment it is possible to make the pump operation unimportant for the position of the lever relative to the float, in other words, the pump operation is not affected by the push rod adjustment relative to the lever.

**.** Thanks to the provision of the pump as described above it is possible to adjust the fork hinge position relative to the push rod and obtain different operations with a single device.

**.** In any case, however, the push rod is always kept in axis with the float and in particular, in axis with the pump unit cylinder. In this way, the action transmitted between the lever, the push rod and the float is always aligned and therefore always efficient, ensuring a greater sensitivity to the user.

**.** Thanks to the pump of the present invention, according to an embodiment, it is possible to ensure a wide exchange surface for the forces between the push rod and the pillar, further improving the sensitivity and accuracy of transmission of the lever action to the float.

**.** Moreover, according to an embodiment, advantageously, despite the great flexibility and modulation of its action, the proposed pump has particularly small overall dimensions thanks to the compactness thereof and to the arrangement of the pump and fork hinges arranged on opposite sides of the handlebar.

**.** Advantageously, according to an embodiment, the adjustment of the centre distance between the fork hinge and the push rod allows adapting the pump behaviour to even very different requirements. For example, it is possible to have a shorter stroke with same force for obtaining the same braking torque or, as an alternative, a longer stroke with weaker force for allowing a greater modulation of the braking action.

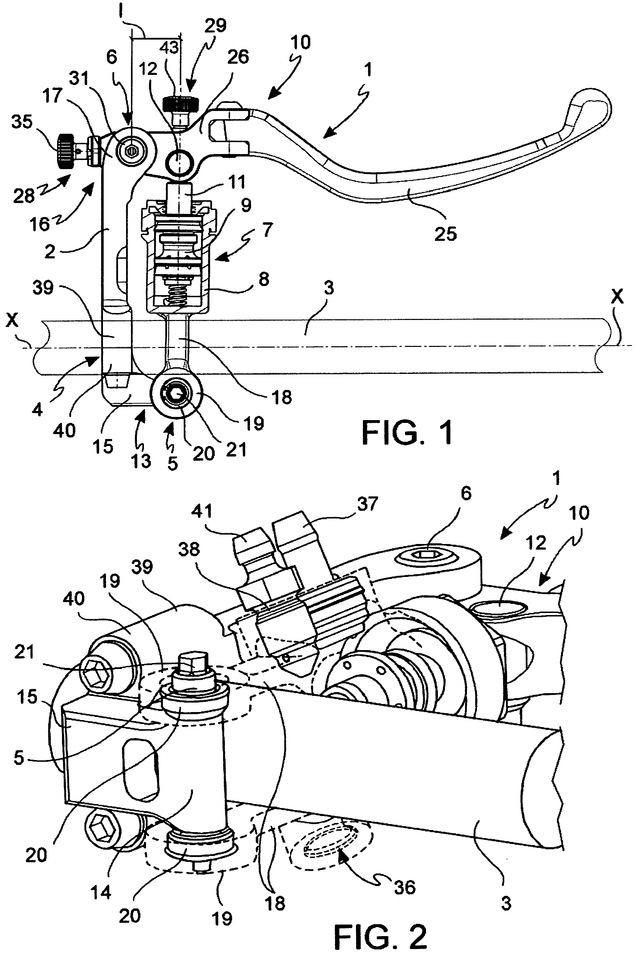

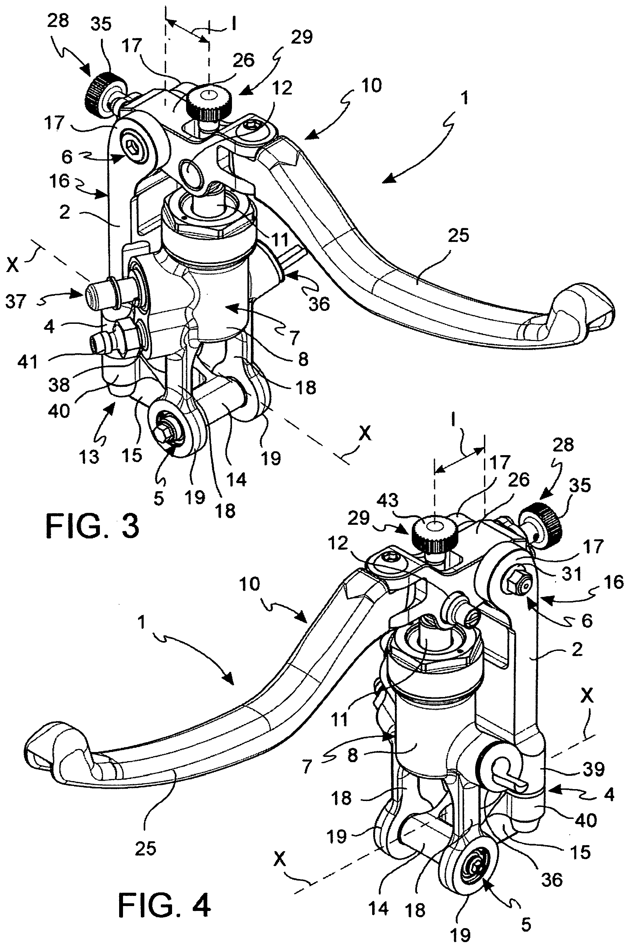

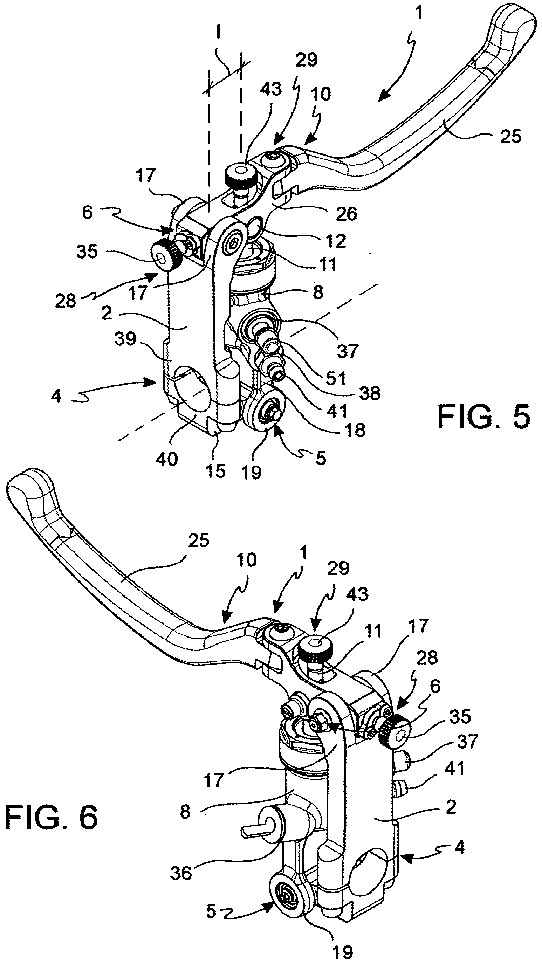

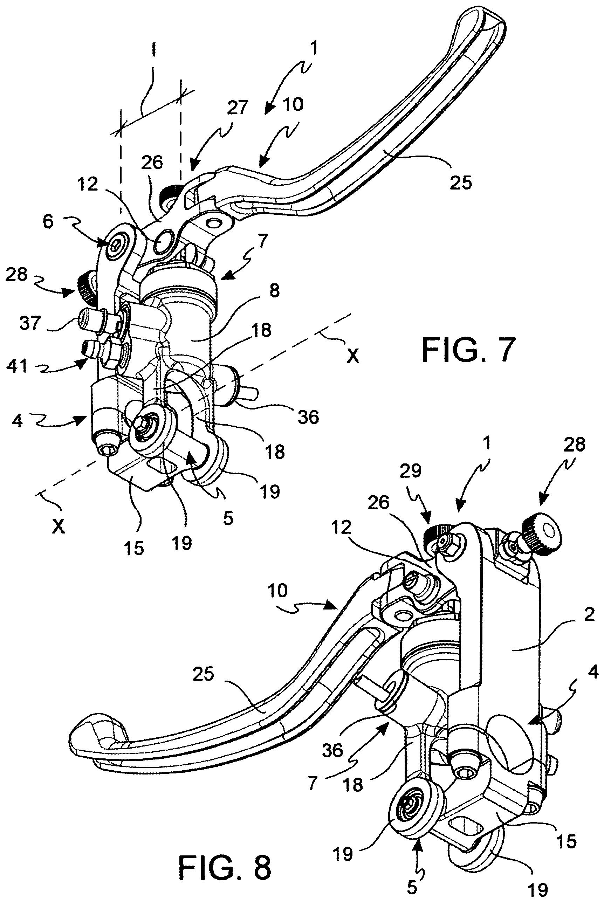

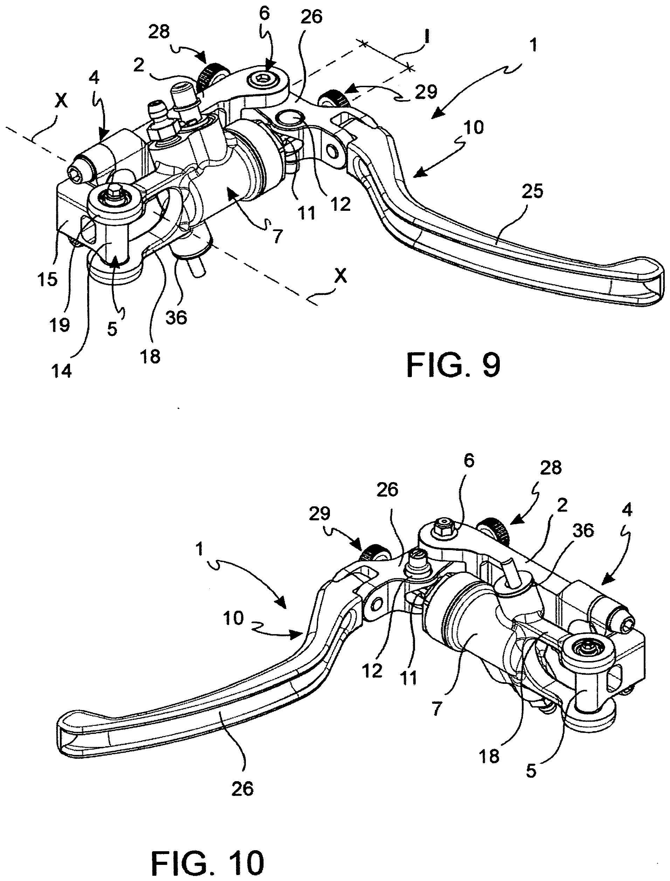

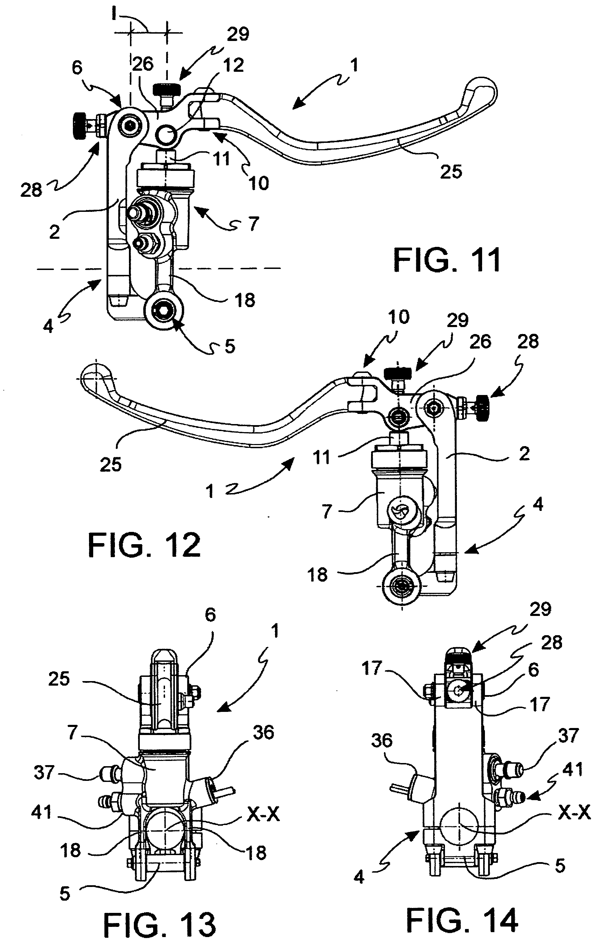

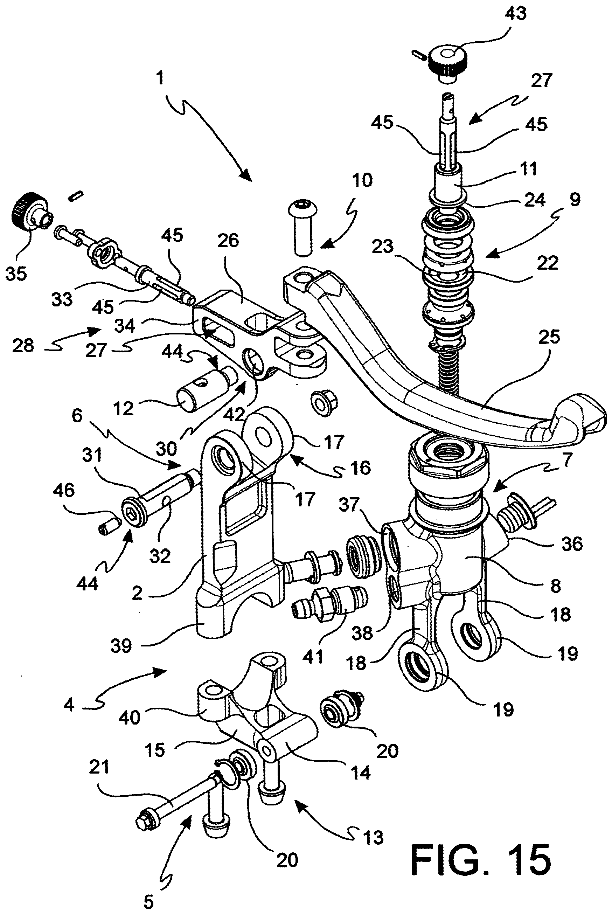

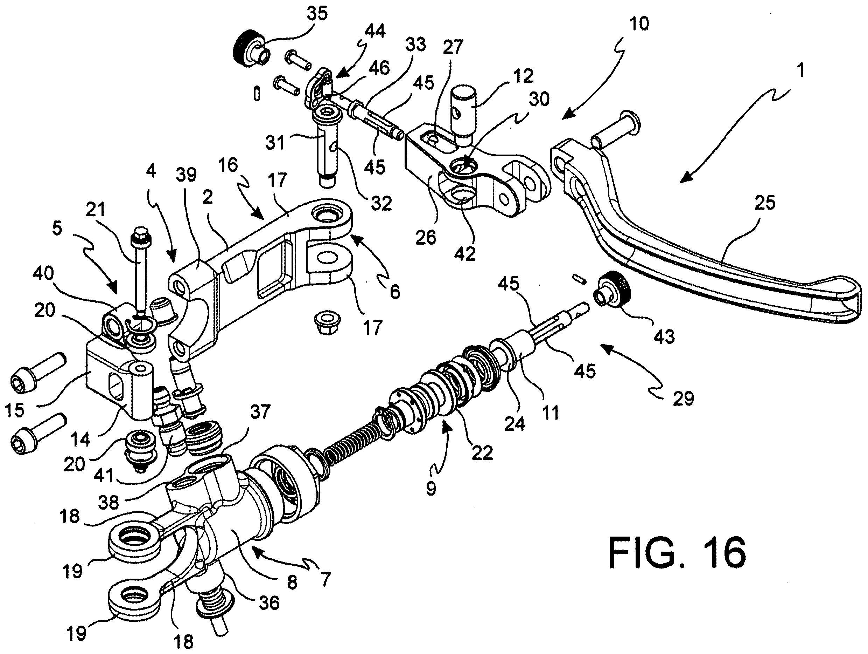

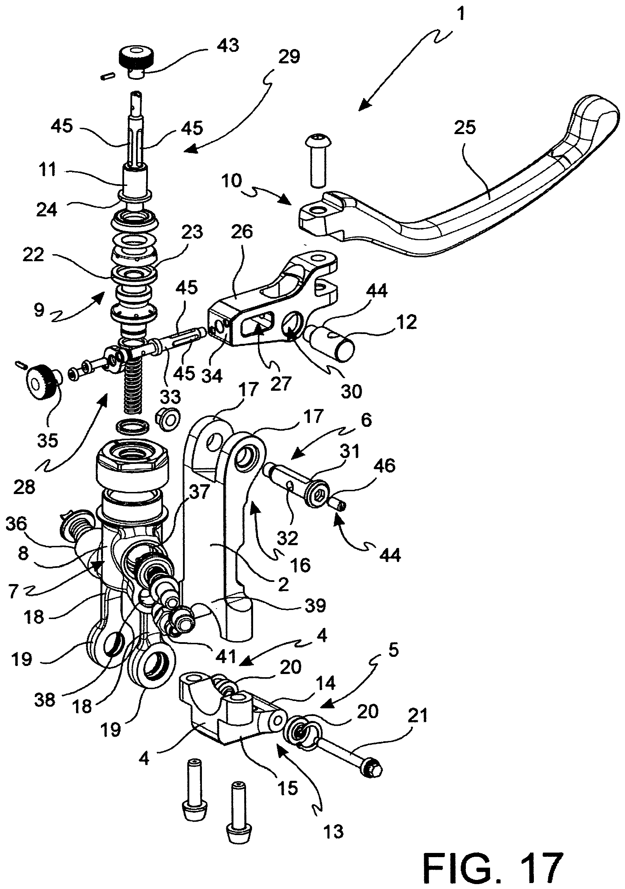

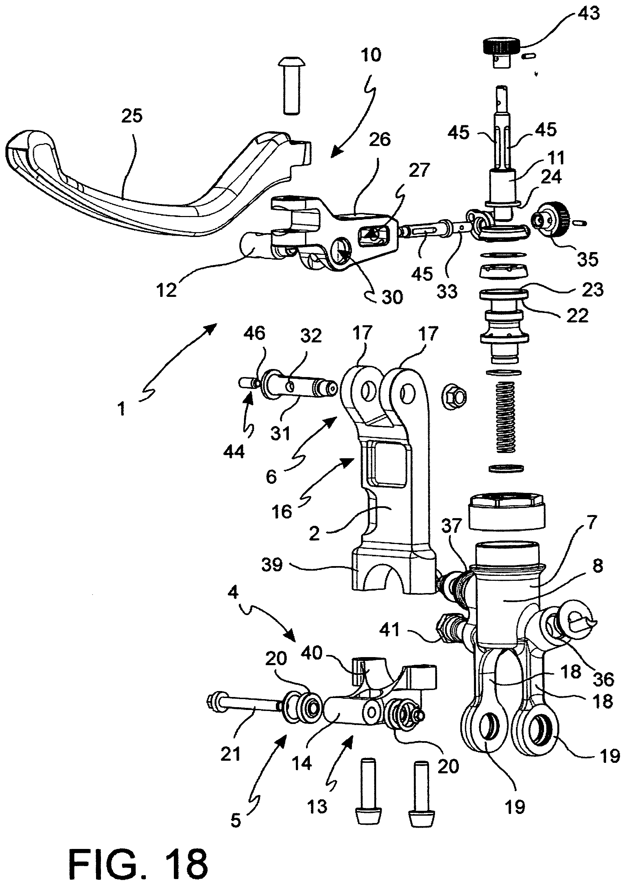

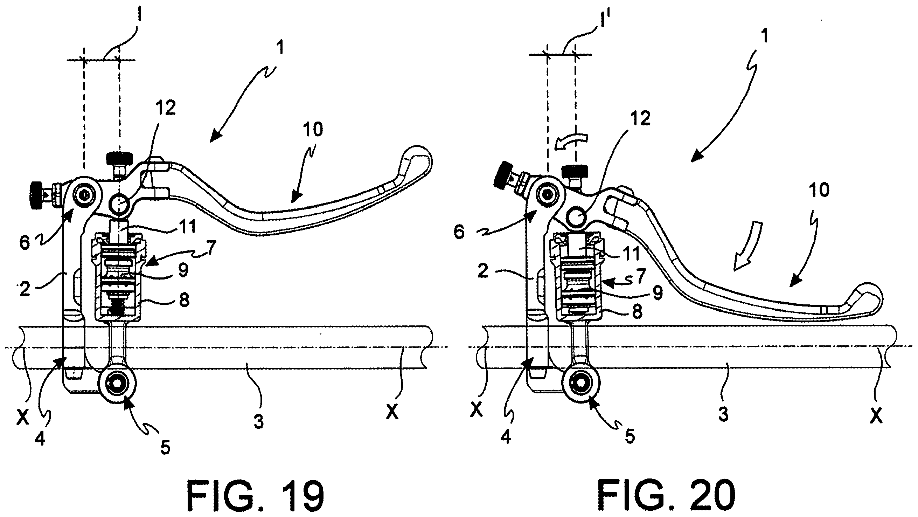

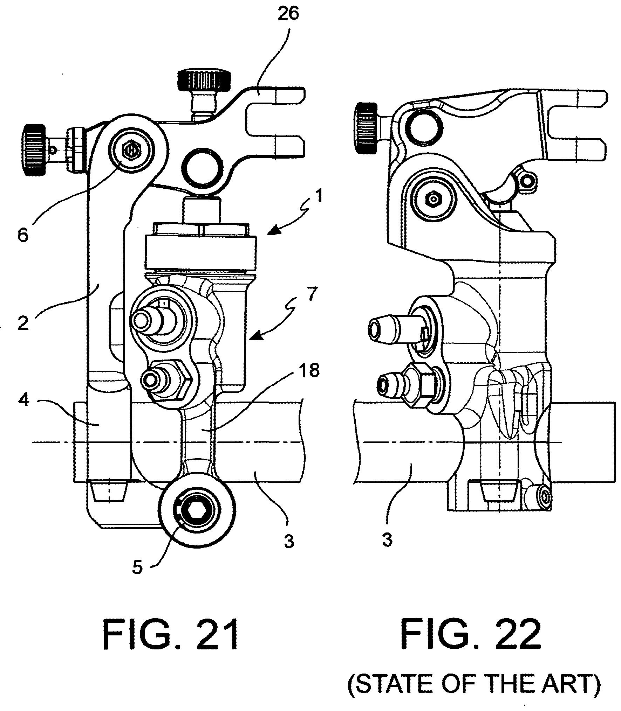

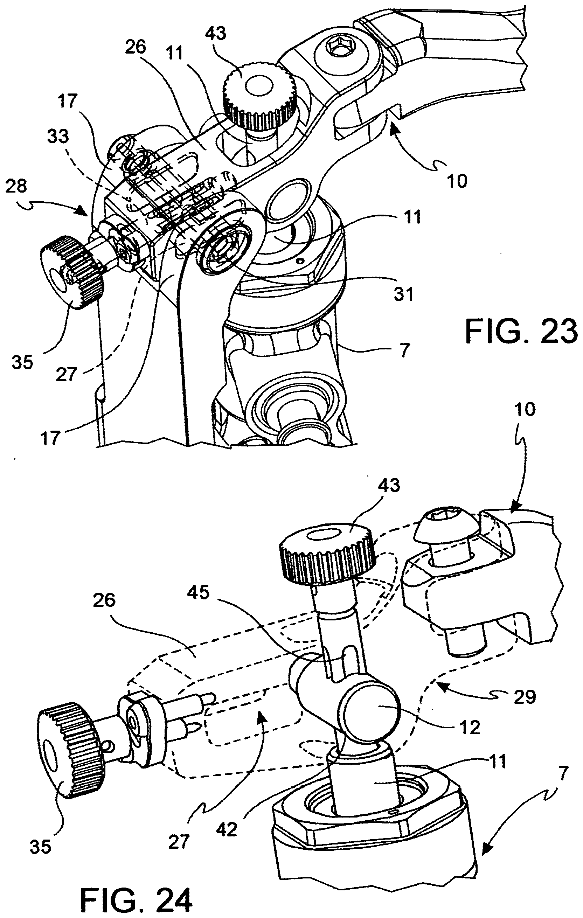

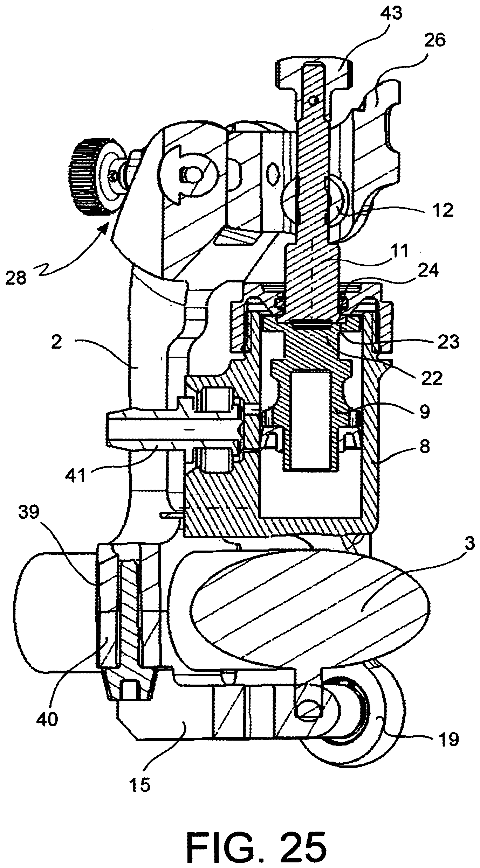

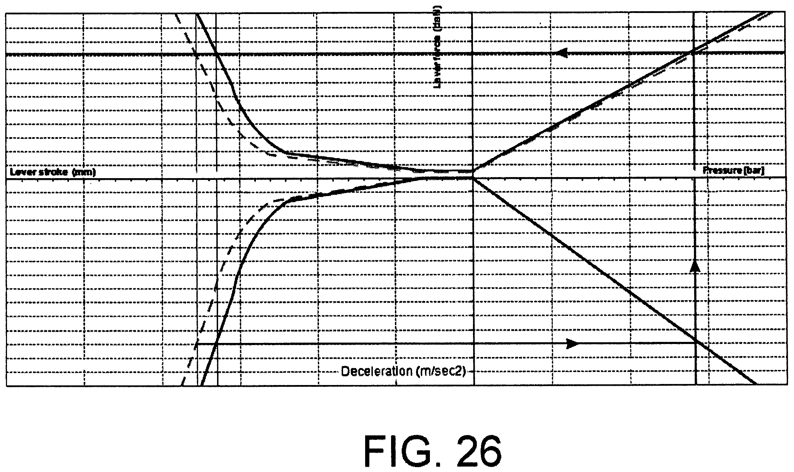

**.** Further features and advantages of the pump according to the invention will appear more clearly from the following description of preferred embodiments thereof, given by way of a non-limiting example with reference to the annexed figures, wherein:
**.** figure 1 shows a front partly cutaway view of a pump connected to a handlebar of a vehicle;
**.** figure 2 shows an axonometric view of the pump of figure 1 with some components in transparency;
**.** figure 3 shows an axonometric view of a pump on the lever and the venting connection side;
**.** figure 4 shows an axonometric view of the pump of figure 3 seen from the lever and the hydraulic circuit connection side;
**.** figure 5 shows an axonometric view of the pump of figure 3 from the fork or support structure side;
**.** figure 6 shows an axonometric view of the pump of figure 3 from the fork and the hydraulic circuit connection side;
**.** figure 7 shows an axonometric view of the pump of figure 3 seen from the handlebar grip side;
**.** figure 8 shows an axonometric view of the pump of figure 3 seen from the handlebar side looking at the pump fork;
**.** figure 9 shows an axonometric view of the pump of figure 3 seen from the handlebar grip side according to a different angle;
**.** figure 10 shows an axonometric view of the pump of figure 3 seen from the handlebar grip side according to a further angle;
**.** figure 11 shows a front view of the pump of figure 3 looking at the venting and tank connecting devices;
**.** figure 12 shows a front view of the pump of figure 3 looking at the hydraulic circuit connection device;
**.** figure 13 shows a side view of the pump of figure 3 seen from the pump body side;
**.** figure 14 shows a side view of the pump of figure 3 seen from the fork side;
**.** figures 15, 16, 17, 18 show axonometric exploded views of the pump of figure 3 according to different angles;
**.** figures 19 and show a front partly cutaway view of a pump in two different lever positions, with pulled lever and released lever;
**.** figures 21 and 22 show a detail of the pump according to the invention compared to a detail of a pump according to the prior art, which show the spaces occupied by the two solutions;
**.** figure 23 shows an axonometric and partly transparency view of a detail of the device for adjusting the centre distance of the pump according to the invention;
**.** figure 24 shows an axonometric and partly transparency view of a second detail of the adjustment device of a pump;
**.** figure 25 shows a cutaway detail of a pump connected to a handlebar which shows the details of the connection between the piston, or float, and the push rod with the lever whereof it transmits the action to the pump unit;
**.** figure 26 shows a bench test diagram of the pump having four quadrants wherein there is a comparison between the behaviour of a pump according to the prior art, with dashed line, and a pump according to the invention, with uninterrupted line, wherein the first quadrant on the top right shows the behaviours depending on the brake fluid pressure and on the force exerted on the pump lever; the second quadrant on the top left shows a comparison of behaviours correlating the action on the pump lever and the lever stroke; the third quadrant on the bottom left compares the curves representing the pump behaviour depending on the lever stroke and on the deceleration exerted on the vehicle with all of the other conditions of the latter being the same; the last quadrant on the bottom right shows the curves depending on the vehicle deceleration and on the pressure exerted in the pump brake fluid.

**.** With reference to the above figures, according to a general embodiment, a pump of a vehicle controlled by handlebar 1 for actuating a braking system or a clutch system, comprises a support, or pump fork, or fork 2. Said fork exhibits a connecting portion to said vehicle handlebar. For example, but not necessarily, said connecting portion comprises two jaws 39 and 40 suitable for surrounding a connecting portion of handlebar 3 and for being clamped firmly thereon, for example by screws or bolts which move jaws 39 and 40 in approach and clamping. Said connecting portion 4 defines an axis or axis of connecting handlebar portion X-X.

**.** According to an embodiment, said fork comprises a pump hinge portion or pump hinge 5 and a fork hinge portion or fork hinge 6.

**.** According to an embodiment, said pump 1 comprises a pump unit 7 having a cylinder 8 wherein a piston, or float 9, is seated. Said float 9 is suitable for pressurising a fluid present in said cylinder 8. Said pump unit 7 is suitable for being put in fluid communication with a system, for example a brake or clutch system, for example through an opening 36, for example but not necessarily placed in the proximity of the bottom of cylinder 8. According to an embodiment, said pump unit 7 exhibits an opening 37 for the fluid connection with a tank suitable for topping up fluid to said pump. According to an embodiment, said pump unit 7 exhibits an opening 38 for the connection of a venting device 41 suitable for venting any gas present into the fluid located into the pump unit 7.

**.** According to an embodiment, said pump unit 7 is connected in an oscillating manner to said pump hinge 5.

**.** According to an embodiment, said pump 1 comprises a lever that may be actuated by hand or a hand lever or lever 10 connected by a push rod 11 to said float 9 so as to exert a pressure on said float for pressurising said brake fluid.

**.** According to an embodiment, said lever 10 is connected in an oscillating manner to said fork hinge 6.

**.** Advantageously, according to a preferred embodiment, said pump hinge 5 is arranged on a first side of said axis of connecting handlebar portion X-X whereas said fork hinge 6 is arranged on a second side of said axis of connecting handlebar portion X-X opposite relative to said pump hinge 5 and to said first side.

**.** According to an embodiment, said push rod 11 is connected in an oscillating manner to said lever 10 by a push rod hinge 12.

**.** According to an embodiment, said oscillating connection between said lever 10 and said push rod 11 is adjustable for varying the relative position of lever 10 relative to push rod 11 in a predetermined manner and removing or approaching said lever 10 from/to said float 9.

**.** For example, but not necessarily, lever 10 exhibits a seat 42 that seats said push rod hinge 12 or barrel in a freely oscillating manner. Advantageously, according to an embodiment, said barrel exhibits a threaded through seat 25 wherein said push rod 11 is seated with a threaded stem thereof. Said push rod protrudes from said barrel 12 and from said lever up to protruding from said lever for connecting to a push rod adjustment knob 43. Thanks to the threaded connection between barrel 12 and push rod 11 it is possible to adjust the length of the push rod in the portion thereof comprised between the push rod hinge 12 or barrel and float 9 so as to adjust the lever position in approach or removal to/from said float. Advantageously, according to an embodiment, the connection between said barrel 12 and said push rod 11 exhibits a snap stopping device 44, for example one or a pair of stopping elements 46 are influenced by elastic elements into seats or grooves 45 of the push rod stem that lock the accidental rotation of push rod 11 up to overcoming the action of the elastic means, beyond which the stopping means retract and allow the push rod rotation up to the insertion of the stopping means into a subsequent seat or groove located in an angularly predetermined position of said stem of said push rod 11. According to an embodiment, said stem of push rod 11 exhibits a plurality of seats or grooves 45 located angularly spaced from one another.

**.** According to an embodiment, the distance between said push rod 11 connected to said lever 10 and said fork hinge 6 is defined as pump centre distance and in the figures it is indicated with reference I. According to an embodiment, said lever 10 is connected in an oscillating and adjustable manner to said fork hinge 6 allowing the approach or removal of said push rod 11 or push rod hinge 12 to/from said fork hinge 6, modifying said centre distance I.

**.** According to an embodiment, at a second fork end 16 thereof, fork 2 exhibits said fork hinge 6. According to an embodiment, at a second fork end 16 thereof, said fork 2 exhibits fork tines 17 suitable for seating an end of said lever 10, connecting said end of lever 10 by said fork hinge 6.

**.** According to an embodiment, said fork 2 is arranged radially or crosswise said axis of connecting handlebar portion X-X.

**.** According to an embodiment, said pump unit 7 is arranged substantially radially or crosswise said axis X-X.

**.** According to an embodiment, said fork 2 extends substantially arranging parallel to said pump unit 7. According to an embodiment, at a first fork end 13 thereof, said fork 2 exhibits said pump hinge 5. According to an embodiment, at a first fork end 13 thereof, said fork 2 exhibits a sleeve 14 suitable for connecting said pump unit 7 in an oscillating manner, forming said pump hinge 5.

**.** According to an embodiment, said fork 2 exhibits a first shelf 15 connected to said portion for connecting the fork to the handlebar 4. According to an embodiment, said first shelf 15 is arranged substantially parallel to said axis X-X and at the free end thereof it supports said pump hinge 5.

**.** According to an embodiment, said pump unit 7 exhibits pump tines 18 that connect to said pump hinge 5. According to an embodiment, said pump tines 18 are suitable for arranging astride of said axis X-X and thus of said handlebar 3 allowing the oscillation of said pump unit 7 relative to said pump hinge 5. According to an embodiment, said pump tines 18 are suitable for connecting in an oscillating manner with ends 19 thereof to a fork sleeve 14 provided at a first fork free end 13. According to an embodiment, said pump tine ends 19 exhibit eyelets suitable for connecting to pump ball bearings 20 keyed on a pump hinge pin 21 seated in said fork sleeve 14.

**.** According to an embodiment, said pump unit 7 exhibits a float provided with a thrust plate 23 at a float thrusting end 22 thereof suitable for receiving a thrust plate head 24 of said push rod 11 made as a separate part relative to said float 9.

**.** According to a different embodiment, said float 9 is made integral with said push rod 11.

**.** According to an embodiment, said lever comprises a gripping portion 25 and a hub 26. According to an embodiment, said lever gripping portion 25 is connected in a collapsible manner in the event of shock relative to said hub 26. For example, but not necessarily, the lever gripping portion 25 is hinged to hub 26 and locked into usage position by stopping means that elastically stressed, are partly seated in a stopping seat up to overcoming the thrust action of the elastic means that, once overcome, release the rotation of the lever gripping portion 25.

**.** According to an embodiment, said lever hub 26 exhibits a hub seat 30 for the freely oscillating connection of a barrel or push rod hinge 12 whereto said push rod 11 is connected in an adjustable manner.

**.** According to an embodiment, said gripping portion 25 is connected to said push rod 11 by said hub 26. According to an embodiment, said hub 26 is connected in an oscillating manner to said fork hinge 5.

**.** According to an embodiment, said hub exhibits a hub slot 27 wherein said fork hinge 5 is inserted in a movable manner, which is connected to said hub 27 by a device for adjusting the fork hinge position 29 so as to adjust in a predetermined manner the distance or the centre distance I between said fork hinge 6 and said push rod 11.

**.** According to an embodiment, opposite the lever gripping portion 25 said lever hub 26 exhibits a seat 21 for hub 30 wherein a fork barrel 31 is seated, having a threaded seat 32 that seats a threaded adjustment pin 33 freely rotatable but axially constrained to a bottom wall 34 of the seat 5 for hub 30, protruding from the opposite side with a control knob 35.

**.** Advantageously, according to an embodiment, the connection between said fork barrel 31 and said threaded adjustment pin 33 exhibits a snap stopping device 44, for example one or a pair of stopping elements 46 are influenced by elastic elements into seats or grooves 45 of the stem of push rod 33 that lock the accidental rotation of the adjustment pin 33 up to overcoming the action of the elastic means, beyond which the stopping means retract and allow the pin rotation up to the insertion of the stopping means into a subsequent seat or groove located in an angularly predetermined position of said adjustment pin 20. According to an embodiment, said adjustment pin exhibits a plurality of seats or grooves 45 located angularly spaced from one another.

**.** As can be seen from figure 26, a bench test of the pump is shown in a diagram. This diagram exhibits four quadrants wherein there is a comparison between the behaviour of a pump according to the prior art, with dashed line, and a pump according to the invention, with uninterrupted line.

**.** The first quadrant on the top right shows the behaviours depending on the brake fluid pressure and on the force exerted on the pump lever.

**.** The second quadrant on the top left shows a comparison of behaviours correlating the action or force applied on the pump lever and the lever stroke. As can be seen, with the same conditions of the vehicle and of the hydraulic circuit, for example of a braking system for a motorcycle, a shorter stroke of the lever is obtained with the proposed solution, the force applied onto the lever being the same.

**.** The third quadrant on the bottom left compares the curves representing the pump behaviour depending on the lever stroke and on the deceleration exerted on the vehicle with all of the other conditions of the latter being the same. As can be seen, with the same conditions of the vehicle and of the hydraulic circuit, for example of a braking system for a motorcycle, a desired deceleration of the vehicle with a shorter stroke of the lever is obtained with the proposed solution.

**.** The last quadrant on the bottom right shows the curves depending on the vehicle deceleration and on the pressure exerted in the pump brake fluid.

**.** According to an embodiment, a vehicle controlled by handlebar comprises a pump as described above. According to an embodiment, said pump is a brake actuation pump. According to an embodiment, said pump is a clutch actuation device.

**.** Of course, a man skilled in the art may make several changes and variations to the pump and to the vehicle according to the invention in order to meet specific and incidental needs, all falling within the scope of protection defined in the following claims.

**REFERENCES**

| | |
|---|---|
| 1 | Pump |
| 2 | Fork or support |
| 3 | Handlebar |
| 4 | Portion connecting the fork to the handlebar |
| 5 | Pump hinge |
| 6 | Fork hinge |
| 7 | Pump unit |
| 8 | Cylinder |
| 9 | Piston or float |
| 10 | Lever or hand actuated lever |
| 11 | Push rod |
| 12 | Barrel or push rod hinge |
| 13 | First fork end |
| 14 | Fork sleeve |
| 15 | First fork shelf |
| 16 | Second fork end |
| 17 | Fork tines |
| 18 | Pump tines |
| 19 | Pump tine ends |
| 20 | Pump hinge bearings |
| 21 | Pump hinge pin |
| 22 | Float thrust end |
| 23 | Thrust plate |
| 24 | Thrust plate head |
| 25 | Lever gripping portion |
| 26 | Lever hub |
| 27 | Hub slot |
| 28 | Device for adjusting the fork hinge position |
| 29 | Device for adjusting the fork hinge relative to the push rod |
| 30 | Hub seat for push rod hinge |
| 31 | Fork barrel |
| 32 | Threaded seat |
| 33 | Adjustment pin with threaded stem |
| 34 | Seat bottom wall |
| 35 | Control knob |
| 36 | Communication opening between cylinder and hydraulic system |
| 37 | Connection opening of the cylinder to the tank |
| 38 | Connection opening to a venting device |
| 39 | Connecting portion jaw |
| 40 | Second jaw |
| 41 | Venting device |
| 42 | Seat for barrel |
| 43 | Push rod adjustment knob |
| 44 | Snap stopping device |
| 45 | Seat or groove for stopping means |
| 46 | Stopping means |
| X-X | Connecting handlebar portion axis |
| I | Pump centre distance |

## Claims

1. Pump for a vehicle controlled by handlebar (1) for actuating a braking system or a clutch system, comprising:
- a support or support fork (2) having a connecting portion (4) to said handlebar (3), said connecting portion defining an axis of connecting portion to said handlebar (X-X);
- said fork comprising a pump hinge portion or pump hinge (5) and a fork hinge portion or fork hinge (6);
- said pump (1) further comprising a pump unit (7) comprising a cylinder (8) wherein a piston or float (9) is seated, suitable for pressurising a fluid present in said cylinder (8) and suitable for being put in fluid communication with a system, for example a brake or clutch system;
- said pump unit (7) being connected in an oscillating manner to said pump hinge (5);
- said pump (1) further comprising a hand lever, or lever (10) connected by a push rod (11) to said float (9) so as to exert a pressure on said float for pressurising said brake fluid;
- said lever (10) being connected in an oscillating manner to said fork hinge (6);
**characterised in that**
- said pump hinge (5) is arranged on one side of said axis of handlebar connecting portion (X-X) and
- said fork hinge (6) is arranged on one side of said axis of handlebar connecting portion (X-X) opposite relative to said pump hinge (5), so that said axis (X-X) is between said two hinges (6, 5).

2. Pump (1) according to claim 1, wherein said push rod (11) is connected in an oscillating manner to said lever (10) by a push rod hinge (12) and wherein said oscillating connection between said lever (10) and said push rod (11) is adjustable for varying in a predetermined manner the relative position of the lever (10) relative to the push rod (11) and approach or remove said lever (10) to/from said float (9).

3. Pump (1) according to claim 1 or 2, wherein the distance between said push rod (11) connected to said lever (10) and said fork hinge (6) is defined pump centre distance (I) and wherein said lever (10) is connected in an oscillating manner and in an adjustable manner to said fork hinge (6) allowing the approach or removal of said push rod (11) or push rod hinge (12) to/from said fork hinge (6) modifying said centre distance (I).

4. Pump (1) according to any one of the previous claims, wherein said fork (2) is arranged radially or crosswise said axis of connecting handlebar portion (X-X) and wherein said fork (2) substantially extends arranging itself parallel to said pump unit (7) and wherein said fork (2) at a first fork end (13) thereof exhibits said pump hinge (5) and wherein said fork (2) at a first fork end (13) thereof exhibits a sleeve (14) suitable for connecting said pump unit (7) in an oscillating manner, forming said pump hinge (5) and wherein said fork (2) exhibits a first shelf (15) connected to said portion for connecting the fork to the handlebar (4) and wherein said first shelf (15) is arranged substantially parallel to said axis (X-X) and at the free end thereof supporting said pump hinge (5) and wherein said fork (2) at a second fork end (16) thereof exhibits said fork hinge (6) and wherein said fork (2) at a second fork end (16) thereof exhibits fork tines (17) suitable for seating an end of said lever (10), connecting said end of the lever (10) by said fork hinge (6).

5. Pump (1) according to any one of the previous claims, wherein said pump unit (7) exhibits pump tines (18) that connect to said pump hinge (5) and wherein said pump tines (18) are suitable for arranging astride of said axis (X-X) and thus of said handlebar (3) allowing the oscillation of said pump unit (7) relative to said pump hinge (5) and wherein said pump tines (18) are suitable for connecting in an oscillating manner with ends (19) thereof to a fork sleeve (14) provided at a first free fork end (13) and wherein said pump tine ends (19) exhibit eyelets suitable for connecting to pump hinge bearings (20) threaded on a pump hinge pin (21) seated in said fork sleeve (14) and wherein said pump unit (7) exhibits a float provided at a float thrust end (22) thereof with a thrust plate (23) suitable for receiving a thrust plate head (24) of said push rod (11) made as a separate part relative to said float (9) and wherein said float (9) is made integral with said push rod (11).

6. Pump (1) according to any one of the previous claims, wherein said lever comprises a gripping portion (25) and a hub (26), said lever gripping portion (25) being connected in a collapsible manner in the event of shock relative to said hub (26) and wherein said gripping portion (25) is connected to said push rod (11) by said hub (26) and wherein said hub (26) is connected in an oscillating manner to said fork hinge (5).

7. Pump (1) according to any one of the previous claims, wherein said lever (10) comprises a hub that exhibits a hub slot (27) wherein said fork hinge (5) is inserted in a movable manner, which is connected to said hub (27) by a device for adjusting the fork hinge position (29) so as to adjust in a predetermined manner the distance or the centre distance (I) between said fork hinge (6) and said push rod (11).

8. Pump (1) according to any one of the previous claims, wherein said lever hub (26) exhibits a hub seat (30) for the freely oscillating connection of a barrel or push rod hinge (12) whereto said push rod (11) is connected in an adjustable manner and wherein said lever hub (26), opposite the lever gripping portion (25) exhibits a hub seat (30) wherein a fork barrel (31) is seated, having a threaded seat (32) that seats a threaded adjustment pin (33) freely rotatable but axially constrained to a bottom wall (34) of the hub seat (30) protruding from the opposite side where a control knob (35) is provided.

9. Pump (1) according to any one of the previous claims, wherein said pump unit (7) is arranged substantially crosswise said axis (X-X).

10. Vehicle controlled by handlebar, comprising a pump (1) as described in any one of claims 1 to 9.

## Patentansprüche

1. Pumpe für ein von einer Lenkstange (1) gesteuertes Fahrzeug zum Aktivieren eines Bremssystems oder eines Kupplungssystems, wobei sie aufweist:
- einen Träger oder eine Traggabel (2) mit einem Verbindungsabschnitt (4) zu der Lenkstange (3), wobei der Verbindungsabschnitt eine Achse des Verbindungsabschnitts zu der Lenkstange (X-X) definiert;
- wobei die Gabel einen Pumpengelenkabschnitt oder ein Pumpengelenk (5) sowie einen Gabelgelenkabschnitt oder ein Gabelgelenk (6) aufweist;
- wobei die Pumpe (1) ferner eine Pumpeneinheit (7) aufweist, die einen Zylinder (8) aufweist, in dem ein Kolben oder Schwimmer (9) sitzt, geeignet, um ein in dem Zylinder (8) befindliches Fluid unter Druck zu setzen, und geeignet, um mit einem System, zum Beispiel einem Brems- oder Kupplungssystem, in Fluidverbindung gesetzt zu werden;
- wobei die Pumpeneinheit (7) mit dem Pumpengelenk (5) verschwenkbar verbunden ist;
- wobei die Pumpe (1) ferner einen Handhebel oder Hebel (10) aufweist, der durch eine Druckstange (11) mit dem Schwimmer (9) verbunden ist, um einen Druck auf den Schwimmer auszuüben, um das Bremsfluid unter Druck zu setzen;
- wobei der Hebel (10) mit dem Gabelgelenk (6) schwenkbar verbunden ist;
**dadurch gekennzeichnet, dass**
- das Pumpengelenk (5) an einer Seite der Achse des Lenkstangenverbindungsabschnitts (X-X) angeordnet ist; und
- das Gabelgelenk (6) an einer zu dem Pumpengelenk (5) relativ entgegengesetzten Seite der Achse des Lenkstangenverbindungsabschnitts (X-X) angeordnet ist, so dass die Achse (X-X) zwischen den zwei Gelenken (6, 5) liegt.

2. Pumpe (1) nach Anspruch 1, wobei die Druckstange (11) mit dem Hebel (10) durch ein Druckstangengelenk (12) schwenkbar verbunden ist, und wobei die Schwenkverbindung zwischen dem Hebel (10) und der Druckstange (11) einstellbar ist, um in vorbestimmter Weise die relative Position des Hebels (10) relativ zu der Druckstange (11) zu verändern und den Hebel (10) dem Schwimmer (9) anzunähern oder von diesem zu entfernen.

3. Pumpe (1) nach Anspruch 1 oder 2, wobei der Abstand zwischen der mit dem Hebel (10) verbundenen Druckstange (11) und dem Gabelgelenk (6) ein Pumpenmittenabstand (I) definiert ist, und wobei der Hebel (10) mit dem Gabelgelenk (6) schwenkbar und einstellbar verbunden ist, um das Annähern oder Entfernen der Druckstange (11) oder des Druckstangengelenks (12) zu/von dem Gabelgelenk (6), den Mittenabstand (I) modifizierend, zu erlauben.

4. Pumpe (1) nach einem der vorhergehenden Ansprüche, wobei die Gabel (2) radial oder quer zur Achse des Verbindungslenkstangenabschnitts (X-X) angeordnet ist, und wobei sich die Gabel (2) im Wesentlichen so erstreckt, dass sie sich selbst parallel zu der Pumpeneinheit (7) anordnet, und wobei die Gabel (2) an ihrem ersten Gabelende (13) das Pumpengelenk (5) aufzeigt, und wobei die Gabel (2) an ihrem ersten Gabelende (13) eine Buchse (14) aufzeigt, die, das Pumpengelenk (5) bildend, zum schwenkbaren Verbinden der Pumpeneinheit (7) geeignet ist, und wobei die Gabel (2) eine erste Platte (15) aufzeigt, die mit dem Abschnitt verbunden ist, um die Gabel mit der Lenkstange (4) zu verbinden, und wobei die erste Platte (15) im Wesentlichen parallel zu der Achse (X-X) angeordnet ist und an ihrem freien Ende das Pumpengelenk (5) trägt, und wobei die Gabel (2) an ihrem zweiten Gabelende (16) das Gabelgelenk (6) aufzeigt, und wobei die Gabel (2) an ihrem zweiten Gabelende (16) Gabelzinken (17) aufweist, die zum Sitz auf einem Ende des Hebels (10) geeignet sind, um das Ende des Hebels (10) mit dem Gabelgelenk (6) zu verbinden.

5. Pumpe (1) nach einem der vorhergehenden Ansprüche, wobei die Pumpeneinheit (7) Pumpenzinken (18) aufweist, die mit dem Pumpengelenk (5) verbunden sind, und wobei die Pumpenzinken (18) zur Anordnung über die Achse (X-X) und somit der Lenkstange (3) geeignet sind, um das Verschwenken der Pumpeneinheit (7) relativ zu dem Pumpengelenk (5) zu erlauben, und wobei die Pumpenzinken (18) zur schwenkbaren Verbindung ihrer Enden (19) mit einer Gabelbuchse (14) geeignet sind, die an einem ersten freien Gabelende (13) vorgesehen ist, und wobei die Pumpenzinkenenden (19) Augen aufzeigen, die zur Verbindung mit Pumpengelenklagern (20) geeignet sind, die auf einen Pumpengelenkbolzen (21) geschraubt sind, der in der Gabelbuchse (14) sitzt, und wobei die Pumpeneinheit (7) einen Schwimmer aufzeigt, der an seinem Schwimmerdruckende (22) mit einer Druckplatte (23) versehen ist, die zur Aufnahme eines Druckplattenkopfs (24) der Druckstange (11) geeignet ist, die als separates Teil relativ zu dem Schwimmer (9) hergestellt ist, und wobei der Schwimmer (9) mit der Druckstange (11) einstückig hergestellt ist.

6. Pumpe (1) nach einem der vorhergehenden Ansprüche, wobei der Hebel einen Griffabschnitt (25) und eine Nabe (26) aufweist, wobei der Hebelgriffabschnitt (25) im Falle eines Stoßes relativ zu der Nabe (26) kollabierbar verbunden ist, und wobei der Griffabschnitt (25) mit der Druckstange (11) durch die Nabe (26) verbunden ist, und wobei die Nabe (26) mit dem Gabelgelenk (5) schwenkbar verbunden ist.

7. Pumpe (1) nach einem der vorhergehenden Ansprüche, wobei der Hebel (10) eine Nabe aufweist, die einen Nabenschlitz (27) aufzeigt, in den das Gabelgelenk (5) bewegbar eingesetzt ist, das mit der Nabe (27) durch eine Vorrichtung zum Einstellen der Gabelgelenkposition (29) verbunden ist, um in vorbestimmter Weise den Abstand oder den Mittenabstand (I) zwischen dem Gabelgelenk (6) und der Druckstange (11) einzustellen.

8. Pumpe (1) nach einem der vorhergehenden Ansprüche, wobei die Hebelnabe (26) einen Nabensitz (30) zur frei schwenkbaren Verbindung eines Stift- oder Druckstangengelenks (12) aufzeigt, womit die Druckstange (11) einstellbar verbunden ist, und wobei die Hebelnabe (26) gegenüber dem Hebelgriffabschnitt (25) einen Nabensitz (30) aufzeigt, in dem ein Gabelstift (31) sitzt, der einen Gewindesitz (32) aufweist, in dem ein Gewindeeinstellbolzen (33) frei drehbar aber axial zu einer Bodenwand (34) des Nabensitzes (30) beschränkt sitzt, der von der entgegengesetzten Seite vorsteht, wo ein Steuerknopf (35) vorgesehen ist.

9. Pumpe (1) nach einem der vorhergehenden Ansprüche, wobei die Pumpeneinheit (7) im Wesentlichen quer zu der Achse (X-X) angeordnet ist.

10. Von einer Lenkstange gesteuertes Fahrzeug, das eine Pumpe (1) nach einem der Ansprüche 1 bis 9 aufweist.

## Revendications

1. Pompe (1) pour un véhicule commandé par un guidon pour actionner un système de freinage ou un système d'embrayage, comprenant :
- un support ou une fourche de support (2) ayant une partie de raccordement (4) audit guidon (3), ladite partie de raccordement définissant un axe de partie de raccordement audit guidon (X-X) ;
- ladite fourche comprenant une partie d'articulation de pompe ou une articulation de pompe (5) et une partie d'articulation de fourche ou une articulation de fourche (6) ;
- ladite pompe (1) comprenant en outre une unité de pompe (7) comprenant un cylindre (8) dans lequel un piston ou flotteur (9) est installé, adapté pour mettre sous pression un liquide présent dans ledit cylindre (8) et adapté pour être mis en communication fluidique avec un système, par exemple un système de frein ou d'embrayage ;
- ladite unité de pompe (7) étant raccordée de manière oscillante à ladite articulation de pompe (5) ;
- ladite pompe (1) comprenant en outre un levier à main, ou un levier (10) raccordé par une tige-poussoir (11) audit flotteur (9) de sorte à exercer une pression sur ledit flotteur pour mettre sous pression ledit liquide de frein ;
- ledit levier (10) étant raccordé de manière oscillante à ladite articulation de fourche (6) ;
**caractérisée en ce que**
- ladite articulation de pompe (5) est agencée sur un côté dudit axe de la partie de raccordement du guidon (X-X) et
- ladite articulation de fourche (6) est agencée sur un côté dudit axe de la partie de raccordement du guidon (X-X) opposé par rapport à ladite articulation de pompe (5), de sorte que ledit axe (X-X) se trouve entre lesdites deux articulations (6, 5).

2. Pompe (1) selon la revendication 1, dans laquelle ladite tige-poussoir (11) est raccordée de manière oscillante audit levier (10) par une articulation de tige-poussoir (12) et dans laquelle ledit raccordement oscillant entre ledit levier (10) et ladite tige-poussoir (11) est réglable pour faire varier de manière prédéterminée la position relative du levier (10) par rapport à la tige-poussoir (11) et approcher ou éloigner ledit levier (10) dudit flotteur (9).

3. Pompe (1) selon la revendication 1 ou 2, dans laquelle la distance entre ladite tige-poussoir (11) raccordée audit levier (10) et ladite articulation de fourche (6) est une distance centrale de pompe définie (I) et dans laquelle ledit levier (10) est raccordé de manière oscillante et de manière réglable à ladite articulation de fourche (6) permettant d'approcher ou d'éloigner ladite tige-poussoir (11) ou ladite articulation de tige-poussoir (12) de ladite articulation de fourche (6) modifiant ladite distance centrale (I).

4. Pompe (1) selon l'une quelconque des revendications précédentes, dans laquelle ladite fourche (2) est agencée radialement ou en travers dudit axe de partie de raccordement du guidon (X-X) et dans laquelle ladite fourche (2) s'étend sensiblement s'agençant parallèlement à ladite unité de pompe (7) et dans laquelle ladite fourche (2) au niveau d'une première extrémité de fourche (13) de celle-ci présente ladite articulation de pompe (5) et dans laquelle ladite fourche (2) au niveau d'une première extrémité de fourche (13) de celle-ci présente un manchon (14) adapté pour le raccordement de ladite unité de pompe (7) de manière oscillante, formant ladite articulation de pompe (5) et dans laquelle ladite fourche (2) présente une première tablette (15) raccordée à ladite partie pour raccorder la fourche au guidon (4) et dans laquelle ladite première tablette (15) est agencée sensiblement parallèlement audit axe (X-X) et à l'extrémité libre de celui-ci soutenant ladite articulation de pompe (5) et dans laquelle ladite fourche (2) au niveau d'une seconde extrémité de fourche (16) de celle-ci présente ladite articulation de fourche (6) et dans laquelle ladite fourche (2) au niveau d'une seconde extrémité de fourche (16) de celle-ci présente des dents de fourche (17) adaptées pour installer une extrémité dudit levier (10), raccordant ladite extrémité du levier (10) par ladite articulation de fourche (6).

5. Pompe (1) selon l'une quelconque des revendications précédentes, dans laquelle ladite unité de pompe (7) présente des dents de pompe (18) qui raccordent ladite articulation de pompe (5) et dans laquelle lesdites dents de pompe (18) sont adaptées pour un agencement à califourchon dudit axe (X-X) et donc dudit guidon (3) permettant l'oscillation de ladite unité de pompe (7) par rapport à ladite articulation de pompe (5) et dans laquelle lesdites dents de pompe (18) sont adaptées pour un raccordement de manière oscillante avec les extrémités (19) de celles-ci à un manchon de fourche (14) disponible au niveau d'une première extrémité de fourche libre (13) et dans laquelle lesdites extrémités de dent de pompe (19) présentent des oeillets adaptés pour un raccordement aux paliers d'articulation de pompe (20) filetés sur une goupille d'articulation de pompe (21) installée dans ledit manchon de fourche (14) et dans laquelle ladite unité de pompe (7) présente un flotteur disponible au niveau d'une extrémité de poussée de flotteur (22) de celle-ci avec une plaque de poussée (23) adaptée pour recevoir une tête de plaque de poussée (24) de ladite tige-poussoir (11) conçue comme une partie séparée par rapport audit flotteur (9) et dans laquelle ledit flotteur (9) est intégré à ladite tige-poussoir (11).

6. Pompe (1) selon l'une quelconque des revendications précédentes, dans laquelle ledit levier comprend une partie d'accrochage (25) et un moyeu (26), ladite partie d'accrochage (25) du levier étant raccordée de manière télescopique en cas de choc par rapport audit moyeu (26) et dans laquelle ladite partie d'accrochage (25) est raccordée à la tige-poussoir (11) par ledit moyeu (26) et dans laquelle ledit moyeu (26) est raccordé de manière oscillante à ladite articulation de fourche (5).

7. Pompe (1) selon l'une quelconque des revendications précédentes, dans laquelle ledit levier (10) comprend un moyeu qui présente une fente de moyeu (27) dans laquelle ladite articulation de fourche (5) est insérée de manière mobile, qui est raccordée audit moyeu (27) par un dispositif pour régler la position de l'articulation de fourche (29) de sorte à régler de manière prédéterminée la distance ou la distance centrale (I) entre ladite articulation de fourche (6) et ladite tige-poussoir (11).

8. Pompe (1) selon l'une quelconque des revendications précédentes, dans laquelle le moyeu (26) de levier présente un siège de moyeu (30) pour le raccordement librement oscillant d'un cylindre ou articulation de tige-poussoir (12) à laquelle ladite tige-poussoir (11) est raccordée de manière réglable et dans laquelle ledit moyeu (26) de levier, opposé à la partie d'accrochage (25) du levier présente un siège de moyeu (30) dans lequel un cylindre de fourche (31) est installé, avec un siège fileté (32) qui accueille une goupille de réglage filetée (33) librement pivotable mais axialement restreinte à une paroi inférieure (34) du siège de moyeu (30) saillant du côté opposé où un bouton de commande (35) est disponible.

9. Pompe (1) selon l'une quelconque des revendications précédentes, dans laquelle ladite unité de pompe (7) est agencée sensiblement en travers dudit axe (X-X).

10. Véhicule commandé par un guidon, comprenant une pompe (1) comme décrite dans l'une quelconque des revendications 1 à 9.
